# EUROPEAN PATENT SPECIFICATION

(11) **EP 0 563 894 B1**
(45) Date of publication and mention of the grant of the patent: **07.01.1998**
(21) Application number: 93105273.2
(22) Date of filing: 30.03.1993
(51) Int. Cl.: C08F 299/08

(54) **Two-part room temperature curable composition**
Bei Raumtemperatur härtbare zweiteilige Zusammensetzung
Composition à deux composants durcissable à temperature ambiante

(30) Priority: 31.03.1992 JP 76937/92; 18.01.1993 JP 5755/93
(43) Date of publication of application: 06.10.1993
(73) Proprietor: CEMEDINE CO., LTD., Shinagawa-ku, Tokyo (JP)
(72) Inventor: Somemiya, Toshio, Inba-gun, Chiba-ken 270-15 (JP); Makino, Zyunzo, Ohmiya-shi, Saitama-ken 330 (JP)
(74) Representative: Grünecker, Kinkeldey, Stockmair & Schwanhäusser Anwaltssozietät

(56) References cited:
- EP-A- 0 265 929
- WO-A-91/05828
- US-A- 4 975 472

## Description

The present invention relates to a two-part room temperature curable composition which can be used widely in various fields such as adhesives, coating materials, gap-filling materials and casting materials.

As a two-part curable composition, there is known a two-part radically-polymerizing composition mainly containing a radically-polymerizing acrylate (or methacrylate) monomer. Moreover, one part of the known composition further contains organic peroxides as polymerization initiators, while the other part thereof contains, for example, metal chelate compounds, organic amines, carboxylic acids, polyamides, organic phosphorus compounds, thiourea compounds or metal salts, as polymerization promoter. Generally, such a two-part radically-polymerizing composition is excellent in the rapid curing property and low temperature curing property as well as in the workability. Therefore, if used for adhesion or protective coating of parts or components constructing cars, speakers, small-size motors and other electric machines, the two-part curing composition can be expected to enhance the productivity of these articles.

In most cases, for giving surface-drying ability to the adhesive, a volatile monomer such as methyl methacrylate is used as the radically-polymerizing monomer to be contained mainly in the composition. However, such an acrylate (or methacrylate) monomer is extremely hard and presents relatively large curing shrinkage in general.

To improve these drawbacks, various methods have been considered so far, in which for example many kinds of high-molecular-weight materials (e.g., various synthetic rubbers or synthetic resins) are added to the composition. However, even in such methods, the above-mentioned problems still remain to be solved. Namely, in case of filling adhesion or in cases where the adhered portion must experience low and high temperature conditions repeatedly, relatively large curing shrinkage still occurs and results in warpage. Thus, the portion to be adhered by such a composition is likely to be worn or broken under such conditions.

Also in the field of epoxy-type curable compositions, there are known methods based on addition of various kinds of rubber or modification of main or side chains of an epoxy compound with urethane or other rubber-related groups in order to make these compositions soft and flexible.

Recently, compositions comprising a combination of a modified silicone, an epoxy resin and a known epoxy-resin curing agent have been proposed as compositions presenting elasticity virtually equivalent to rubber. The compositions of this type are used for easing warpage or stress of a portion to be adhered by the compositions. Namely, the physical properties of the adhesives are utilized to lessen the stress to be caused by repetition of low and high temperature conditions and therefore to enhance much the reliability or durability of adhesion.

However, though the silicone-epoxy compositions have such excellent properties as mentioned above, the curing rate of the compositions is generally low at ordinary and low temperature conditions. Therefore, such silicone-epoxy compositions must be restricted in use in an assembly line or coating process which requires rapid curing.

Therefore, it is an object of the present invention to provide a two-part room temperature curable composition which has a rapid curing property substantially equal to that of the above-mentioned acrylate (methacrylate) type polymerizing compositions as well as rubber-like elasticity substantially equivalent to that of the above-described modified silicone-epoxy-type curing composition. Namely, the aim of the present invention is to improve the extremely high hardness of the acrylate (or methacrylate) type polymerizing composition as well as to solve the problem on the low curing rate of the modified silicone-type composition, thereby to obtain a room temperature curing composition having a rapid curing property and rubber-like elasticity.

After various studies on solving these problems of the two-part radically-polymerizing acrylate (or methacrylate) composition and modified silicone type curing composition, the inventors found that a two part room temperature curable composition having a rapid curing property equivalent to that of the acrylate-type composition as well as having rubber-like elasticity substantially equal to that of the modified silicone type composition can be obtained by combining both the two compositions.

The above object of the present invention has been solved by providing the following two-part room temperature curable compositions:
1) A two-part room temperature curable composition comprising:
   - part liquid A containing
      a) a high-molecular-weight copolymer having reactive silicon groups capable of crosslinking by forming siloxane bonds and whose molecular chain comprises
         (1) an alkyl acrylate ester monomeric unit and/or an alkyl methacrylate ester monomeric unit, each having an alkyl group with 1 to 8 carbon atoms, and
         (2) an alkyl acrylate ester monomeric unit and/or an alkyl methacrylate ester monomeric unit, each having an alkyl group with at least 10 carbon atoms, wherein the total amount of the monomeric units (1) and (2) in said copolymer a) exceeds 50 weight %,
      b) a polymerization promoter of a radically-polymerizing monomer mainly containing acrylate and/or methacrylate
      as essential components, and
   - part liquid B containing
      a) said radically-polymerizing monomer,
      b) a polymerization initiator of said radically-polymerizing monomer and
      c) a curing promoter of said high-molecular-weight component having reactive silicon groups
      as essential components,
   the total amount of the polymerization initiator and the polymerization promoter in the two-part room temperature curable composition being 0.05 to 20 wt%.
2. A two-part room temperature curable composition comprising:
   - part liquid A containing
      a) a high-molecular-weight copolymer having reactive silicon groups capable of crosslinking by forming siloxane bonds and whose molecular chain comprises
         (1) an alkyl acrylate ester monomeric unit and/or an alkyl methacrylate ester monomeric unit, each having an alkyl group with 1 to 8 carbon atoms, and
         (2) an alkyl acrylate ester monomeric unit and/or an alkyl methacrylate ester monomeric unit, each having an alkyl group with at least 10 carbon atoms, wherein the total amount of the monomeric units (1) and (2) in said copolymer a) exceeds 50 weight %,
      b) a polymerisation initiator of a radically-polymerizing monomer mainly containing acrylate and/or methacrylate
      as essential components, and
   - part liquid B containing
      a) said radically-polymerizing monomer,
      b) a polymerization promoter of said radically-polymerizing monomer and
      c) a curing promoter of said high-molecular-weight component having reactive silicon groups
      as essential components,
   the total amount of the polymerization initiator and the polymerization promoter in the two-part room temperature curable composition being 0.05 to 20 wt%.
3. A two-part room temperature curable composition comprising:
   - part liquid A containing
      a) a high-molecular-weight copolymer having reactive silicon groups capable of crosslinking by forming siloxane bonds and whose molecular chain comprises
         (1) an alkyl acrylate ester monomeric unit and/or an alkyl methacrylate ester monomeric unit, each having an alkyl group with 1 to 8 carbon atoms, and
         (2) an alkyl acrylate ester monomeric unit and/or an alkyl methacrylate ester monomeric unit, each having an alkyl group with at least 10 carbon atoms, wherein the total amount of the monomeric units (1) and (2) in said copolymer a) exceeds 50 weight %,
      b) a radically-polymerizing monomer mainly containing acrylate and/or methacrylate and
      c) a polymerization promoter of said radically-polymerizing monomer
      as essential components, and
   - part liquid B containing
      a) said radically-polymerizing monomer,
      b) a polymerization initiator of said radically-polymerizing monomer and
      c) a curing promoter of said high-molecular-weight component having reactive silicon groups
      as essential components,
   the total amount of the polymerization initiator and the polymerization promoter in the two-part room temperature curable composition being 0.05 to 20 wt%.
4. A two-part room temperature curable composition comprising:
   - part liquid A containing
      a) a high-molecular-weight copolymer having reactive silicon groups capable of crosslinking by forming siloxane bonds and whose molecular chain comprises
         (1) an alkyl acrylate ester monomeric unit and/or an alkyl methacrylate ester monomeric unit, each having an alkyl group with 1 to 8 carbon atoms, and
         (2) an alkyl acrylate ester monomeric unit and/or an alkyl methacrylate ester monomeric unit, each having an alkyl group with at least 10 carbon atoms, wherein the total amount of the monomeric units (1) and (2) in said copolymer a) exceeds 50 weight %,
      b) a radically-polymerizing monomer mainly containing acrylate and/or methacrylate and
      c) a polymerization initiator of said radically-polymerizing monomer
      as essential components, and
   - part liquid B containing
      a) said radically-polymerizing monomer,
      b) a polymerization promoter of said radically-polymerizing monomer and
      c) a curing promoter of said high-molecular-weight component having reactive silicon groups
      as essential components,
   the total amount of the polymerization initiator and the polymerization promoter in the two-part room temperature curable composition being 0.05 to 20 wt%.
5. A two-part room temperature curable composition comprising:
   - part liquid A containing
      a) a high-molecular-weight copolymer having reactive silicon groups capable of crosslinking by forming siloxane bonds and whose molecular chain comprises
         (1) an alkyl acrylate ester monomeric unit and/or an alkyl methacrylate ester monomeric unit, each having an alkyl group with 1 to 8 carbon atoms, and
         (2) an alkyl acrylate ester monomeric unit and/or an alkyl methacrylate ester monomeric unit, each having an alkyl group with at least 10 carbon atoms, wherein the total amount of the monomeric units (1) and (2) of said copolymer exceeds 50 weight %,
      b) a radically-polymerizing monomer mainly containing acrylate and/or methacrylate and
      c) a polymerization initiator of said radically-polymerizing monomer
      as essential components, and
   - part liquid B containing
      a) a curing promoter of said high-molecular-weight component having reactive silicon groups and
      b) a polymerization promoter of said radically-polymerizable monomer
      as essential components,
   the total amount of the polymerization initiator and the polymerization promoter in the two-part room temperature curable composition being 0.05 to 20 wt%.
6. A two-part room temperature curable composition comprising:
   - part liquid A containing
      a) a high-molecular-weight copolymer having reactive silicon groups capable of crosslinking by forming siloxane bonds and whose molecular chain comprises
         (1) an alkyl acrylate ester monomeric unit and/or an alkyl methacrylate ester monomeric unit, each having an alkyl group with 1 to 8 carbon atoms, and
         (2) an alkyl acrylate ester monomeric unit and/or an alkyl methacrylate ester monomeric unit, each having an alkyl group with at least 10 carbon atoms, wherein the total amount of the monomeric units (1) and (2) in said copolymer a) exceeds 50 weight %,
      b) a radically-polymerizing monomer mainly containing acrylate and/or methacrylate and
      c) a polymerization promoter of said radically-polymerizing monomer
      as essential components, and
   - part liquid B containing
      a) a curing promoter of said high-molecular-weight component having reactive silicon groups and
      b) a polymerization initiator of said radically-polymerizing monomer
      as essential components,
   the total amount of the polymerization initiator and the polymerization promoter in the two-part room temperature curable composition being 0.05 to 20 wt%.
7. A two-part room temperature curable composition comprising:
   - part liquid A containing
      a) a high-molecular-weight copolymer having reactive silicon groups capable of crosslinking by forming siloxane bonds and whose molecular chain comprises
         (1) an alkyl acrylate ester monomeric unit and/or an alkyl methacrylate ester monomeric unit, each having an alkyl group with 1 to 8 carbon atoms, and
         (2) an alkyl acrylate ester monomeric unit and/or an alkyl methacrylate ester monomeric unit, each having an alkyl group with at least 10 carbon atoms, wherein the total amount of the monomeric units (1) and (2) in said copolymer a) exceeds 50 weight %,
      b) a radically-polymerizing monomer mainly containing acrylate and/or methacrylate,
      c) a polymerization promoter of said radically-polymerizing monomer and
      d) a curing promoter of said high-molecular-weight component having reactive silicon groups
      as essential components, and
   - part liquid B containing a polymerization initiator of said radically-polymerizing monomer as an essential component,
   the total amount of the polymerization initiator and the polymerization promotor in the two-part room temperature curable composition being 0.05 to 20 wt%.

In one embodiment, the two-part room temperature curable composition of the present invention comprises part liquid A containing said high-molecular-weight copolymer having reactive silicon groups and said polymerization promoter of said radically-polymerizing monomer, as essential components; and part liquid B containing said radically-polymerizing monomer, said polymerization initiator of said radically-polymerizing monomer and said curing promoter of said high-molecular-weight copolymer having reactive silicon groups, as essential components.

Alternatively, each of the polymerization promoter and polymerization initiator of the radically-polymerizing monomer may be contained in either one of part liquids A and B. Thus, it is also possible to blend the polymerization initiator in part liquid A while the polymerization promoter in part liquid B.

Moreover, it is also possible that both part liquids A and B contain radically-polymerizing monomers. In this case, the kind or combination of the radically-polymerizing monomers in part liquids A and B may be the same or different.

In addition, it is also possible that part liquid A contains a high-molecular-weight copolymer having reactive silicon groups, a radically-polymerizing monomer and a polymerization initiator of the radically-polymerizing monomer, as essential components; and other part liquid B contains a curing promoter of the high-molecular-weight copolymer having reactive silicon groups and a polymerization promoter of the radically-polymerizing monomer, as essential components.

Also in this combination, each of the polymerization promoter and polymerization initiator of the radically-polymerizing monomer may be contained in either one of part liquids A and B. Thus, it is also possible to blend the initiator in part liquid A while the promoter in part liquid B.

Furthermore, it is also possible that only the polymerization promoter of the radically-polymerizing monomer is contained in part liquid B, and all the rest of the above-described components are contained in liquid part A. Alternatively, part liquid B may be used as a curing-promoter primer to use this system as a honeymoon-type adhesive.

Incidentally, there is no specific range on the blending ratio between part liquids A and B. Thus, it is possible to adopt any blending ratio of these part liquids if the effect of the present invention can be guaranteed.

The radically-polymerizing monomer used in the present invention is a radically-polymerizing monomer mainly containing acrylate and/or methacrylate, and the acrylate (methacrylate) includes alkyl-type or substituted alkyl-type monofunctional acrylates (methacrylates), such as methyl acrylate (methacrylate), ethyl acrylate (methacrylate), stearyl acrylate (methacrylate), benzyl acrylate (methacrylate), isobornyl acrylate (methacrylate), dicyclopentenyl acrylate (methacrylate) and dicyclopentenyloxyethyl acrylate (methacrylate); ether-type monofunctional acrylates (methacrylates), such as methoxyethyl acrylate (methacrylate), methoxydiethylene glycol acrylate (methacrylate) and methoxypolyethylene glycol acryate (methacrylate); alkylene-type bifunctional acrylates (methacrylates), such as ethylene glycol diacrylate (dimethacrylate), 1,3-butylene glycol diacrylate (dimethacrylate) and neopentyl glycol diacrylate (dimethacrylate); ether-type bifunctional acrylates (methacrylates), such as diethylene glycol diacrylate (dimethacrylate), polyethylene glycol diacrylate (dimethacrylate), polypropylene glycol diacrylate (dimethacrylate), triethylene glycol diacrylate (dimethacrylate) and tetraethylene glycol diacrylate (dimethacrylate); trifunctional acrylates (methacrylates), such as trimethylolpropane triacrylate (trimethacrylate) and trimethylolethane triacrylate (trimethacrylate); multifunctional acrylates (methacrylates), such as pentaerythritol tetraacrylate (tetramethacrylate), dipentaerythritol polyacrylate (polymethacrylate) and tetramethylolmethane tetraacrylate (tetramethacrylate); polar-group-containing or substituting-atom-containing acrylates (methacrylates), such as 2-hydroxyethyl acrylate (methacrylate), tetramethylolmethane triacrylate (trimethacrylate), pentaerythritol triacrylate (trimethacrylate), 2,3-dibromopropyl acrylate (methacrylate), tetrahydrofurfuryl acrylate (methacrylate), 2-chloroethyl acrylate (methacrylate) and dimethylaminoethyl acrylate (methacrylate); epoxy acrylates (methacrylates), such as 2,2-bis(4-acryloxy-diethoxyphenyl)propane diacrylate (dimethacrylate), bisoxypolyethylene-type bisphenol-A-diacrylate (dimethacrylate), bisoxypropylene-type bisphenol-A-acrylate (methacrylate) and bisoxy-2-hydroxyethyl-type bisphenol-A-diacrylate (dimethacrylate); polyester-type diacrylates (dimethacrylates) such as adipic acid-1,6-hexanediol-diacrylate (dimethacrylate); and urethane acrylates (methacrylates).

These acrylates or methacrylates may be used alone or in combination of the two or more kinds thereof. Moreover, if required, a small amount of monomers other than these acrylates or methacrylates may be used together with them. Incidentally, when it is necessary to use a solid monomer, it is preferred that the monomer is used together with a liquid monomer such as 2-hydroxyethyl methacrylate.

The high-molecular-weight copolymer having reactive silicon groups capable of crosslinking by forming siloxane bonds and whose molecular chain comprises
(1) an alkyl acrylate ester monomeric unit and/or an alkyl methacrylate ester monomeric unit, each having an alkyl group with 1 to 8 carbon atoms, and
(2) an alkyl acrylate ester monomeric unit and/or an alkyl methacrylate ester monomeric unit, each having an alkyl group with at least 10 carbon atoms, wherein the total amount of the monomeric units (1) and (2) in said copolymer a) exceeds 50 weight %, are disclosed in JP-A-63 112 642.

Incidentally, these high-molecular-weight copolymers having reactive silicon groups may be used alone or in combination of the two or more kinds thereof. Moreover, if required, it is possible to use them together with a polymerizing monomer such as acrylate or methacrylate.

As the method of curing or setting the acrylate (methacrylate) component used according to the present invention, it is possible to adopt methods having been already employed for curing two-part-type radically-polymerizing compositions.

In more detail, as the initiator for the radical polymerization, there can be mentioned diacyl peroxides, such as benzoyl peroxide and acetyl peroxide; hydroperoxides, such as cumene hydroperoxide and t-butyl hydroperoxide; ketone peroxides, such as methyl ethyl ketone peroxide and cyclohexanone peroxide; dialkyl peroxides, such as dicumyl peroxide and di-t-butyl peroxide; peroxy esters such as t-butyl peroxy acetate; combinations of thioglycerol and pyrazoles and/or pyrazolones; and other various known initiators used for radical polymerization.

Incidentally, these radical polymerization initiators may be used in combination of the two or more kinds thereof.

As the polymerization promoter to be used together with the radical polymerization initiator for curing the acrylate (methacrylate) component of the composition according to the present invention, for example, there can be mentioned tertiary amines, such as N,N-dimethylaniline, N,N-dimethyl-p-toluidine, diisopropanol-p-toluidine and triethylamine; polyamines, such as diethylenetriamine, triethylenetetramine, pentaethylenehexamine; thioureas, such as thiourea, ethylene thiourea, benzoyl thiourea, acetyl thiourea and tetramethyl thiourea; organic or inorganic acid salts of metals such as copper, cobalt, manganese and vanadium, and organic chelate compounds of the same metals with acetylacetone or the like; reducing organic compounds such as ascorbic acid and gallic acid; mercaptans; and other known promoters such as saccharin and salts thereof.

Also, these curing promoters may be used in combination of the two or more kinds thereof.

The total amount of the radical polymerization initiator and polymerization promoter in the two-part room temperature curable composition of the present invention is 0.05 to 20 wt%, and preferably 0.1 to 10 wt%. If the content is too low, the polymerization curing rate also becomes low and the curing reaction takes so much time. On the contrary, if too high, excessive heat generation occurs so that a lot of air bubbles are formed in the set layer and the physical properties are drastically degraded, respectively.

If required, in the part mainly containing the radically-polymerizing monomer of the two-part room temperature curable composition according to the present invention, wax such as paraffin wax and rice wax, quinone-type stabilizers such as p-benzoquinone and hydroquinone, hindered-phenol-type antioxidants such as butyl hydroxytoluene, organic or inorganic fillers, dyes, pigments, thixotropic agents, and adhesion-aid agents such as aminosilanes, epoxysilanes and phosphoric-acid-group-containing acrylate (methacrylate) monomers may be contained as surface-drying-aid agent.

As the means for curing the high-molecular-weight copolymer having reactive silicon groups as the other main component used in the present invention, known curing promoters having been already used in the art can be used. As the curing promoter, there can be mentioned organotin compounds, such as dibutyltin dilaurate, dioctyltin dimalate, dibutyltin phthalate, tin (II) octylate, dibutyltin methoxide, dibutyltin diacetylacetate and dibutyltin diversatate; organic titanate compounds, such as tetrabutyl titanate, tetraisopropyl titanate and triethanolamine titanate; metal carboxylates, such as lead caprylate and cobalt naphthenate; aminosilanes such as γ-aminopropyltriethoxysilane and γ -aminopropyltrimethoxysilane; quarternary ammonium salts, such as tetramethyl ammonium chloride and benzalkonium chloride; organic phosphate compounds, such as monomethyl phosphate, di-n-butyl phosphate and triphenyl phosphate.

These curing promoters may be used alone or in combination of the two or more kinds thereof. Incidentally, it is also possible to blend these compounds in the component having reactive silicon groups. However, it is preferable to add them to the part comprising only the radically-polymerizing monomer because easy handling can be achieved in view of e.g. preservation stability.

The amount of the curing promoter will be enough if it is used in the conventional manner.

If required, in the part mainly containing reactive silicon groups of the two-part room temperature curable composition according to the present invention, there can be further blended wax such as paraffin wax and rice wax, various acrylate (methacrylate) monomers; quinone-type stabilizers such as p-benzoquinone and hydroquinone, hindered-phenol-type antioxidants such as butyl hydroxytoluene, organic or inorganic fillers, dyes, pigments, thixotropic agents, defoaming agents, leveling agents, viscosity increasers, viscosity reducing agents such as high-boiling-point solvents, and other various additives.

Moreover, when phosphate compounds such as di-n-butyl phosphate and 2-acryl(methacryl)oxyethyl phosphate are used as the curing promoter for giving extremely rapid curing ability to the reactive-silicon-group-containing copolymer and if the acid component due to the phosphate compound still remains after the curing reaction of the reactive-silicon-group-containing copolymer the heat-age stability is likely to be degraded markedly because the acidity works as depolymerizing catalyst. Therefore, in order to gradually neutralize the acidity, it is recommendable to add inorganic fillers such as calcium oxide, calcium carbonate and magnesium oxide or epoxy compounds such as bisphenol-A-type epoxy compounds and bisphenol-F-type epoxy compounds to the curing reaction. Furthermore, it is also possible to blend an adhesion-aid agent such as epoxysilanes and aminosilanes in the curing reaction system.

The above and other objects, features and advantages of the present invention will become manifest to those versed in the art on making reference to the following detailed description and accompanying tables concerning preferred embodiments of the present invention.

Hereinafter, the present invention will be described in detail with reference to several embodiments thereof. Unless otherwise stated, parts and % in the description are based on weight respectively. In addition, the two-part room temperature curable composition related to the present invention is constituted by two kinds of liquid compositions, and these two liquid compositions are called here "part liquid A" and "part liquid B" respectively. In this case, part liquid A contains a high-molecular-weight copolymer having reactive silicon groups, while part liquid B contains a radically-polymerizing functional monomer.

### Inventive Example 1

### [Preparation of Part Liquid A]

Part liquid A was prepared by stirring and mixing 100 parts of modified silicone S-303 (trade name of a high-molecular-weight compound having reactive silicon groups, produced by Kanegafuchi Chemical Industry Co., Ltd.) with 20 parts of dicyclopentenyl methacrylate and 2 parts of cumene hydroperoxide by means of a laboratory stirrer.

### [Preparation of Part Liquid B]

Part liquid B was prepared by dissolving and stirring 50 parts of dicyclopentenyl methacrylate, 50 parts of 2-hydroxypropyl methacrylate, 0.05 part of vanadium acetylacetonate, 0.5 part of hydroquinone and 2 parts of 2-methacryloxyethyl phosphate together by means of a laboratory stirrer.

Then a two-part room temperature curable composition was prepared by blending these part liquids A and B at the ratio of 1 : 1 (weight ratio).

Based on the successive curing or setting test over the obtained two-part room temperature curing composition, 1. curing or setting time, 2. flexibility and 3. curing or setting state of the composition were evaluated respectively. From the results shown in Table 1, it can be seen that the composition has good curing time (6 minutes) and flexibility as well as presents a uniform curing state over its entire body.

### 1. Setting Time

Two sheets of soft steel plates having a length of 100 mm, width of 25 mm and thickness of 1.5 mm were laminated together by the composition of Inventive Example 1 with a 1.27 cm (half-inch) lap. Then the time requied for the laminated body to overcome a load of 3kg given along the body was measured as the curing time.

### 2. Flexibility

A test piece was made by coating the composition of Inventive Example 1 prepared by the blending at the above-mentioned ratio at a thickness of 1.0 mm over a soft steel plate having a length of 100 mm, width of 25 mm and thickness of 0.5 mm, and then curing the composition at room temperature for 24 hours. Thereafter, the test piece was wound around a 2.54 cm (1-inch) mandrel at room temperature to observe the change of its surface.

### 3. Setting State

The curing or setting state of the composition of Inventive Example 1 was observed during preparation of 50g of the curable composition by the blending at the above-mentioned ratio.

### Inventive Examples 2 and 3

### [Preparation of Part Liquid A]

Part liquid A for each Example was prepared in the same manner as in Inventive Example 1 except by using, in place of the modified silicone S-303, modified silicone SAT-010 (trade name of a high-molecular-weight compound having reactive silicon groups for Inventive Example 2, produced by Kanegafuchi Chemical Industry Co., Ltd.), modified silicone M-217 (trade name of a high-molecular-weight compound having reactive silicon groups for Inventive Example 3, produced by Kanegafuchi Chemical Industry Co., Ltd.).

The curing or setting test over the combination of each part liquid A and part liquid B of Inventive Examples 2 and 3 was carried out in the same manner as conducted in Inventive Example 1. As seen from the test results also shown in Table 1, all the above-stated curing or setting properties of any combination are good for practical use.

**Table-1**

| Number of Inventive Example | Setting Time (minutes) | Properties | |
|---|---|---|---|
| | | Flexibility | Setting State |
| 1 | 6 | good | good∗ |
| 2 | 5 | ditto | ditto |
| 3 | 7 | ditto | ditto |

| | | | |
|---|---|---|---|
| (Note) ∗: uniformly cured or set over the entire body at the same time | | | |

### Comparative Example 1

60 parts of methyl methacrylate, 40 parts of 2-hydroxyethyl methacrylate, 10 parts of HYCAR 1072 (trade name of NBR rubber produced by JAPAN SYNTHETIC RUBBER Co., Ltd.), 0.5 part of paraffin wax and 0.1 part of hydroquinone were stirred with a laboratory stirrer to obtain a uniform liquid. Then, 4 parts of cumene hydroperoxide was added to a half of the admixture to obtain a uniform liquid (part liquid A). Moreover, 2 parts of ethylene thiourea and 1 part of 2-methacryloxyethyl phosphate were added to the other half of the admixture to obtain another uniform liquid (part liquid B). Thereafter, these part liquids A and B were blended at the ratio of 1 : 1 to obtain a conventionally-known acrylate (methacrylate) type composition (two-part room temperature curable composition).

So-obtained part liquids A and B were then blended in the same manner as in Inventive Example 1, and the setting test as in Inventive Example 1 was also conducted to examine the setting properties. As the result, the setting time was good (8 minutes), but the flexibility was inferior to that of the Inventive Examples because crack, peeling and foaming were seen. Moreover, the curing state was not uniform because the reaction heat caused foaming.

### Comparative Example 2

Part liquid A was prepared by adding 5 parts of tris(dimethylamino)phenol to 100 parts of SAIRYL 5B-30 (produced by Kanegafuchi Chemical Industry Co., Ltd.), while part liquid B was obtained by adding 3 parts of dibutyltin dilaurate to 100 parts of EPIKOTE #828 (produced by Shell Chemical Co., Ltd.) as an epoxy compound. Incidentally, the blending ratio between these liquids A and B was 2 : 1 as the weight ratio. In this manner, a two-part room temperature curable composition was obtained.

The curing or setting test was conducted by blending part liquids A and B at the weight ratio of 2 : 1 to evaluate the above-stated properties. The curing time was so long as to be 65 minutes. The flexibility was good, but the curing state was not uniform, and a thin coat layer was formed over the surface after the lapse of about 60 minutes.

### Inventive Examples 4 to 10

In the following examples, reaction component (a) is a polymerization initiator of the radically-polymerizing monomer, (b) is a polymerization promoter of the radically-polymerizing monomer and (c) is a curing promoter of the high-molecular-weight copolymer having reactive silicon groups.

### [Preparation of Part Liquid A]

Part liquid A of each example was prepared by admixing 100 parts of modified silicone S-303 (trade name of a high-molecular-weight compound having reactive silicon groups, produced by Kanegafuchi Chemical Industry Co., Ltd.) and 20 parts of dicyclopentenyl methacrylate, together with, (a) 4 parts of cumene hydroperoxide (Inventive Example 4), (b) 2 parts of ethylene thiourea (Inventive Example 5), (a) 4 parts of cumene hydroperoxide and (b) 2 parts of 3,5-dimethylpyrazole and 0.5 part of 1-phenyl-3-methyl-5-pyrazolone (Inventive Example 6), (a) 4 parts of methyl ethyl ketone peroxide (Inventive Example 7), (a) 1 part of benzoyl peroxide (Inventive Example 8), 2 parts of 3,5-dimethylpyrazole and 0.5 part of thioglycerol (Inventive Example 9), or (a) 2 parts of cumene hydroperoxide and (b) 1 part of saccharin (Inventive Example 10).

### [Preparation of Part Liquid B]

Part liquid B of each example was prepared by admixing 50 parts of dicyclopentenyl methacrylate, 50 parts of 2-hydroxypropyl methacrylate, together with, 2 parts of ethylene thiourea and 1 part of (c) di-n-butyl phosphate (Inventive Example 4), (a) 4 parts of cumene hydroperoxide and (c) 1 part of di-n-butyl phosphate (Inventive Example 5), (b) 0.1 part of copper 2-ethylhexanoate and 1 part of (c) PHOSMER M (trade name of acid phosphoxy ethylmethacrylate produced by YUSHI SEIHIN Co., Ltd.) (Inventive Example 6), (b) 0.1 part of cobalt naphthenate and (c) 0.5 part of di-n-butyltin dilaurate (Inventive Example 7), (b) 1 part of N,N-dimethyl-p-toluidine and (c) 0.5 part of dibutyltin diacetylacetate (Inventive Example 8), 0.1 part of vanadium acetylacetonate and 1 part of (c) PHOSMER M (trade name of acid phosphoxy ethylmethacrylate produced by YUSHI SEIHIN Co., Ltd.) (Inventive Example 9), or (b) 0.1 part of N,N-dimethyl-p-toluidine, 0.01 part of copper 2-ethylhexanoate and 1 part of tri-n-butylamine and (c) 0.5 part of dibutyltin diacetylacetate and 1 part of γ -aminopropyltriethoxysilane (Inventive Example 10).

The properties of each obtained two-part room temperature curable composition were evaluated in the same manner as in the case of Inventive Example 1. As is seen from the results of evaluation shown in Table 2, all the properties of every example were good for practical use.

Namely, from the results of Inventive Examples 4 to 10, we found that the two-part room temperature curable composition according to the present invention presents good curing properties in case of using various polymerization initiators and polymerization promoters of the radically-polymerizing monomer.

Moreover, we also recognized that it is possible to use various compounds as the curing promoter for the high-molecular-weight copolymer having reactive silicon groups.

In addition, as is seen from the results of Inventive Examples 4 and 5, it is also possible to exchange the polymerization initiator and/or polymerization promoter of the radically-polymerizing monomer in one example for the other initiator and/or promoter in the other example between the part liquids A and B of them.

**Table-2**

| Number of Inventive Example | Setting Time (minutes) | Properties | |
|---|---|---|---|
| | | Flexibility | Setting State |
| 4 | 8 | good | good∗ |
| 5 | 8 | ditto | ditto |
| 6 | 6 | ditto | ditto |
| 7 | 10 | ditto | ditto |
| 8 | 2 | ditto | ditto |
| 9 | 3 | ditto | ditto |
| 10 | 5 | ditto | ditto |

| | | | |
|---|---|---|---|
| (Note) ∗: uniformly cured or set over the entire body at the same time | | | |

### Inventive Examples 11 to 19

In the following inventive examples, (M) designates a radically-polymerizing monomer and (d) is a stabilizer.

### [Preparation of Part Liquid A]

Part liquid A of each example was prepared by dissolving and stirring with a laboratory stirrer 100 parts of modified silicone SAT-010 (trade name of a high-molecular-weight compound having reactive silicon groups, produced by Kanegafuchi Chemical Industry Co., Ltd.), together with, (M) 20 parts of methyl methacrylate, (a) 1 part of cumene hydroperoxide, (b) 2 parts of 3,5-dimethylpyrazole and 0.5 part of thioglycerol (Inventive Example 11), no (M) and the same (a) and (b) as those in Inventive Example 11 (Inventive Example 12), (M) 20 parts of isobornyl acrylate and the same (a) and (b) as those in Inventive Example 11 (Inventive Example 13), (M) 20 parts of dicyclopentenyl acrylate and the same (a) and (b) as those in Inventive Example 11 (Inventive Example 14), (M) 10 parts of diallyl phthalate monomer and the same (a) and (b) as those in Inventive Example 11 (Inventive Example 15), no (M) and the same (a) and (b) as those in Inventive Example 11 (Inventive Example 16), (M) 20 parts of NK ESTER BE400 (trade name of 2,2'-bis(4-methacryloxydiethoxyphenyl)propane produced by SHIN NAKAMURA CHEMICAL INDUSTRY CO., LTD.) and the same (a) and (b) as those in Inventive Example 11 (Inventive Example 17), (M) 10 parts of styrene monomer and the same (a) and (b) as those in Inventive Example 11 (Inventive Example 18), or (M) 20 parts of dicyclopentenyl methacrylate, (a) 4 parts of cumene hydroperoxide and the same (b) as those in Inventive Example 11 (Inventive Example 19).

### [Preparation of Part Liquid B]

Part liquid B of each example was prepared by dissolving and stirring with a laboratory stirrer (M) 40 parts of methyl methacrylate and 60 parts of 2-hydroxyethyl methacrylate (b) and/or (c) 3 parts of ACCELERATOR VN₂ (trade name of acidic phosphoric acid solution of vanadium produced by NIPPON KAYAKU CO., LTD.) and (d) 0.5 part of butylhydroxytoluene (Inventive Example 11), (M) 60 parts of 2-hydroxypropyl methacrylate and 40 parts of LIGHT ESTER 3002M (trade name of epoxy dimethacrylate produced by KYOEISHA YUSHI CHEMICAL CO., LTD.) and the same (b), (c) and (d) as those in Inventive Example 11 (Inventive Example 12), 60 parts of isobornyl acrylate and 40 parts of ART RESIN UN-6060PTM (trade name of urethane dimethacrylate produced by NEGAMI INDUSTRY CO., LTD.) and the same (b), (c) and (d) as those in Inventive Example 11 (Inventive Example 13), 50 parts of dicyclopentenyl acrylate and 50 parts of 2-hydroxypropyl acrylate and the same (b), (c) and (d) as those in Inventive Example 11 (Inventive Example 14), (M) 10 parts of diallyl phthalate monomer and 90 parts of 2-hydroxypropyl methacrylate and the same (b), (c) and (d) as those in Inventive Example 11 (Inventive Example 15), (M) 10 parts of trimethylolpropane trimethacrylate and 90 parts of dicyclopentenyl methacrylate and the same (b), (c) and (d) as those in Inventive Example 11 (Inventive Example 16), (M) 20 parts of NK ESTER BE400 (trade name of 2,2'-bis(4-methacryloxydiethoxyphenyl)propane produced by SHIN NAKAMURA CHEMICAL INDUSTRY CO., LTD.) and the same (b), (c) and (d) as those in Inventive Example 11 (Inventive Example 17), (M) 40 parts of styrene monomer and 60 parts of NEW TRACK 420S (bisphenol-A type unsaturated polyester resin produced by KAO CORP.) and the same (b), (c) and (d) as those in Inventive Example 11 (Inventive Example 18), or (M) 60 parts of ART RESIN UNA-6 ((trade name of urethane dimethacrylate produced by NEGAMI INDUSTRY CO., LTD.) and 40 parts of dicyclopentenyl methacrylate, (b) 2 parts of ethylene thiourea and 0.02 part of copper naphthenate, (c) 2 parts of dibutyltin diacetylacetate and 1 part of dibutyltin sulfide and the same (d) as in Inventive Example 11 (Inventive Example 19).

The properties of each obtained two-part room temperature curing composition were evaluated in the same manner as in the case of Inventive Example 1. As is seen from the results of evaluation shown in Table 3, all the properties of every example were good for practical use.

Namely, from the results of Inventive Examples 11 to 19, we found that various polymerizing monomers can be used for the two-part room temperature curable composition according to the present invention.

**Table-3**

| Number of Inventive Example | Setting Time (minutes) | Properties | |
|---|---|---|---|
| | | Flexibility | Setting State |
| 11 | 5 | good | good∗ |
| 12 | 5 | ditto | ditto |
| 13 | 6 | ditto | ditto |
| 14 | 6 | ditto | ditto |
| 15 | 8 | ditto | ditto |
| 16 | 4 | ditto | ditto |
| 17 | 7 | ditto | ditto |
| 18 | 10 | ditto | ditto |
| 19 | 2 | ditto | ditto |

| | | | |
|---|---|---|---|
| (Note) ∗: uniformly cured or set over the entire body at the same time | | | |

### Inventive Examples 20 to 24

### [Preparation of Part Liquid A]

Part liquid A of each example was prepared by dissolving and stirring with a laboratory stirrer 80 parts of modified silicone S-303 (trade name of a high-molecular-weight compound having reactive silicon groups, produced by Kanegafuchi Chemical Industry Co., Ltd.) and 20 parts of modified silicone SAT-010 (trade name of a high-molecular-weight compound having reactive silicon groups, produced by Kanegafuchi Chemical Industry Co., Ltd.), together with 1 part of cumene hydroperoxide and 0.5 part of thioglycerol.

### [Preparation of Part Liquid B]

Part liquid B of each example was prepared by dissolving and stirring with a laboratory stirrer 40 parts of dicyclopentenyl methacrylate, 40 parts of 2-hydroxypropyl methacrylate and 20 parts of NK ESTER BE-400, together with 3 parts of 3,5-dimethylpyrazole, 4 parts of ACCELERATOR VN₂, 2 parts of γ-methacryloxytrimethoxysilane and 0.3 part of butylhydroxytoluene.

So-obtained part liquids A and B were then mixed at the ratios of 10 : 90 (Inventive Example 20), 25 : 75 (Inventive Example 21), 50 : 50 (Inventive Example 22), 75 : 25 (Inventive Example 23) and 90 : 10 (Inventive Example 24), respectively. Moreover, the curing properties of the respective examples were evaluated in the same manner as in Inventive Example 1. As shown in Table 4, good results were obtained over all of these inventive examples.

From the results of Inventive Examples 20 to 24, we found that the two-part room temperature curable composition of the present invention can present good curing properties over a wide mixing range of part liquids A and B.

**Table-4**

| Number of Inventive Example | Setting Time (minutes) | Properties | |
|---|---|---|---|
| | | Flexibility | Setting State |
| 20 | 5 | good | good∗ |
| 21 | 7 | ditto | ditto |
| 22 | 8 | ditto | ditto |
| 23 | 10 | ditto | ditto |
| 24 | 12 | ditto | ditto |

| | | | |
|---|---|---|---|
| (Note) ∗: uniformly cured or set over the entire body at the same time | | | |

### Inventive Example 25

Part liquid A was prepared by dissolving and stirring with a laboratory stirrer 100 parts of modified silicone S-303 (trade name of a high-molecular-weight compound having reactive silicon groups, produced by Kanegafuchi Chemical Industry Co., Ltd.) and 100 parts of dicyclopentenyl methacrylate together with 4 parts of cumene hydroperoxide as polymerization initiator of the radically-polymerizing monomer.

### [Preparation of Part Liquid B]

Part liquid B was prepared by dissolving and stirring with a laboratory stirrer 0.2 part of vanadium acetylacetonate as polymerization promoter of the radically-polymerizing monomer and 1 part of di-n-butyl phosphate as setting promoter of the high-molecular-weight copolymer having reactive silicon groups.

The properties of the obtained two-part room temperature curable composition were evaluated in the same manner as in Inventive Example 1. As the result, the curing time was 8 minutes, and the flexibility was allowable. In addition, the curing state was so good that the entire body was cured uniformly at the same time.

From the results of Inventive Example 25, we found that the two-part room temperature curable composition of the present invention can present good curing properties even in the case in which the part liquid A contains a high-molecular-weight copolymer having reactive silicon groups, a radically-polymerizing monomer and a polymerization initiator of the radically-polymerizing monomer while the part liquid B containing only a curing promoter of the high-molecular-weight copolymer having reactive silicon groups and a polymerization promoter of the radically-polymerizing monomer.

Of course, it is possible to exchange the polymerization initiator and polymerization promoter each for the other if undesirable reaction does not occur to the curing promoter of the high-molecular-weight copolymer having reactive silicon groups.

### Inventive Examples 26 to 31

### [Preparation of Part Liquid A]

Part liquid A of each inventive example was prepared by dissolving and stirring with a laboratory stirrer 100 parts of modified silicone S-302 (trade name of a high-molecular-weight compound having reactive silicon groups, produced by Kanegafuchi Chemical Industry Co., Ltd.) and 100 parts of dicyclopentenyl methacrylate together with 4 parts of cumene hydroperoxide as polymerization initiator of the radically-polymerizing monomer and 2 parts of dibutyltin diacetylacetate as setting promoter of the high-molecular-weight compound having reactive silicon groups. Moreover, the system of part liquid A for Inventive Examples 29 to 31 further contains 1 part of saccharin as curing promoter of the radically-polymerizing monomer.

### [Preparation of Part Liquid B]

Part liquid B of each example was prepared by using, as polymerization promoter of the radically-polymerizing monomer, 100 parts of ACCELERATOR VN₂ (trade name of acidic phosphoric acid solution of vanadium produced by NIPPON KAYAKU CO., LTD.) (Inventive Example 26), 100 parts of 8% copper naphthenate solution (Inventive Example 27), 100 parts of 6% cobalt naphthenate solution (Inventive Example 28), 100 parts of VANACS #808 (trade name of a reagent produced by reaction of amine and aldehyde by DUPONT CO., LTD.) (Inventive Example 29), 100 parts of 8% copper naphthenate solution (Inventive Example 30), or 100 parts of 6% cobalt naphthenate solution (Inventive Example 31).

The properties of each obtained two-part room temperature curable composition were evaluated in the same manner as in Inventive Example 1. The results are shown in Table 5. As is seen from Table 5, all the properties of every example were allowably good.

Namely, from the results of Inventive Examples 26 to 31, we found that the two-part room temperature curable composition of the present invention can present good properties even in the case where the polymerization promoter of radically-polymerizing monomer is blended in the part liquid B.

**Table-5**

| Number of Inventive Example | Setting Time (minutes) | Properties | |
|---|---|---|---|
| | | Flexibility | Setting State |
| 26 | 3 | good | good∗ |
| 27 | 2 | ditto | ditto |
| 28 | 3 | ditto | ditto |
| 29 | 2 | ditto | ditto |
| 30 | 2 | ditto | ditto |
| 31 | 3 | ditto | ditto |

| | | | |
|---|---|---|---|
| (Note) ∗: uniformly cured or set over the entire body at the same time | | | |

### Inventive Examples 32 to 37

The same part liquids A and B as those in Inventive Examples 26 to 31 were used, and tests on curing time and flexibility were carried out, including a method in which part liquid B was coated thinly on one side of a substrate with a waste piece and part liquid A was coated on liquid B without blending therewith. The results are shown in Table 6. As seen from Table 6, all the properties of every example were good for practical use.

Namely, from the results of Inventive Examples 32 to 37, we found that the two-part room temperature curable composition of the present invention can present good properties even in the case where the part liquid B is used as curing promoter primer.

Moreover, we also recognized that the two-part room temperature curable composition can be used in the so-called honeymoon adhesion in which part liquid A coated on one side of one substrate is covered on part liquid B coated on one side of the other substrate.

**Table-6**

| Number of Inventive Example | Setting Time (minutes) | Properties Flexibility |
|---|---|---|
| 32 | 3 | good |
| 33 | 2 | ditto |
| 34 | 3 | ditto |
| 35 | 2 | ditto |
| 36 | 2 | ditto |
| 37 | 3 | ditto |

As stated above, since the two-part room temperature curable composition of the present invention has rapid curing ability and flexibility equivalent to that of rubber materials, when used as flexible protective coating, potting material, sealing material or adhesive, the workability and reliability can be enhanced sharply as compared with the above prior art.

Even if a radically-polymerizing monomer having weak odor or low volatility other than the methyl methacrylate monomer is used in this case, since the curing or setting system of the high-molecular-weight copolymer having reactive silicon groups is used together with the monomer, the surface curing or setting can be rapidly completed. Therefore, it becomes possible to prevent pollution of the working environment to be caused in general by such a volatile polymerizing monomer.

Moreover, without materials such as e.g. NBR rubber which takes much time to be dissolved, the composition of this invention can be prepared only by mixing liquid parts. Thus, the production cost can be reduced greatly.

Furthermore, the two-part room temperature curable composition of the present invention can be used for filling in a great amount or adhesion over a wide area, such as panels, to which the conventional acryl or methacryl type curable composition can not be applied because of its large curing shrinkage, or for adhesion to ferrite magnet to which the conventional one can not be utilized because of its undesirably high hardness at low temperature.

In addition, the two-part room temperature curable composition of the present invention can be applied to a low-temperature working environment in which the conventional modified silicone-epoxy type curable composition can not be used because of its low curing or setting rate at low temperature. Further, the composition according to this invention can be also used effectively for gap filling to which the conventional silicone-epoxy composition can not be applied because it can not be set uniformly over the entire body, or for assembly working in production lines in which the conventional one can not be used because of its low curing rate.

## Claims

1. A two-part room temperature curable composition comprising:
- part liquid A containing
a) a high-molecular-weight copolymer having reactive silicon groups capable of crosslinking by forming siloxane bonds and whose molecular chain comprises
(1) an alkyl acrylate ester monomeric unit and/or an alkyl methacrylate ester monomeric unit, each having an alkyl group with 1 to 8 carbon atoms, and
(2) an alkyl acrylate ester monomeric unit and/or an alkyl methacrylate ester monomeric unit, each having an alkyl group with at least 10 carbon atoms, wherein the total amount of the monomeric units (1) and (2) in said copolymer a) exceeds 50 weight %,
b) a polymerization promoter of a radically-polymerizing monomer mainly containing acrylate and/or methacrylate
as essential components, and
- part liquid B containing
a) said radically-polymerizing monomer,
b) a polymerization initiator of said radically-polymerizing monomer and
c) a curing promoter of said high-molecular-weight component having reactive silicon groups
as essential components,
the total amount of the polymerization initiator and the polymerization promoter in the two-part room temperature curable composition being 0.05 to 20 wt%.

2. A two-part room temperature curable composition comprising:
- part liquid A containing
a) a high-molecular-weight copolymer having reactive silicon groups capable of crosslinking by forming siloxane bonds and whose molecular chain comprises
(1) an alkyl acrylate ester monomeric unit and/or an alkyl methacrylate ester monomeric unit, each having an alkyl group with 1 to 8 carbon atoms, and
(2) an alkyl acrylate ester monomeric unit and/or an alkyl methacrylate ester monomeric unit, each having an alkyl group with at least 10 carbon atoms, wherein the total amount of the monomeric units (1) and (2) in said copolymer a) exceeds 50 weight %,
b) a polymerisation initiator of a radically-polymerizing monomer mainly containing acrylate and/or methacrylate
as essential components, and
- part liquid B containing
a) said radically-polymerizing monomer,
b) a polymerization promoter of said radically-polymerizing monomer and
c) a curing promoter of said high-molecular-weight component having reactive silicon groups
as essential components,
the total amount of the polymerization initiator and the polymerization promoter in the two-part room temperature curable composition being 0.05 to 20 wt%.

3. A two-part room temperature curable composition comprising:
- part liquid A containing
a) a high-molecular-weight copolymer having reactive silicon groups capable of crosslinking by forming siloxane bonds and whose molecular chain comprises
(1) an alkyl acrylate ester monomeric unit and/or an alkyl methacrylate ester monomeric unit, each having an alkyl group with 1 to 8 carbon atoms, and
(2) an alkyl acrylate ester monomeric unit and/or an alkyl methacrylate ester monomeric unit, each having an alkyl group with at least 10 carbon atoms, wherein the total amount of the monomeric units (1) and (2) in said copolymer a) exceeds 50 weight %,
b) a radically-polymerizing monomer mainly containing acrylate and/or methacrylate and
c) a polymerization promoter of said radically-polymerizing monomer
as essential components, and
- part liquid B containing
a) said radically-polymerizing monomer,
b) a polymerization initiator of said radically-polymerizing monomer and
c) a curing promoter of said high-molecular-weight component having reactive silicon groups
as essential components,
the total amount of the polymerization initiator and the polymerization promoter in the two-part room temperature curable composition being 0.05 to 20 wt%.

4. A two-part room temperature curable composition comprising:
- part liquid A containing
a) a high-molecular-weight copolymer having reactive silicon groups capable of crosslinking by forming siloxane bonds and whose molecular chain comprises
(1) an alkyl acrylate ester monomeric unit and/or an alkyl methacrylate ester monomeric unit, each having an alkyl group with 1 to 8 carbon atoms, and
(2) an alkyl acrylate ester monomeric unit and/or an alkyl methacrylate ester monomeric unit, each having an alkyl group with at least 10 carbon atoms, wherein the total amount of the monomeric units (1) and (2) in said copolymer a) exceeds 50 weight %,
b) a radically-polymerizing monomer mainly containing acrylate and/or methacrylate and
c) a polymerization initiator of said radically-polymerizing monomer
as essential components, and
- part liquid B containing
a) said radically-polymerizing monomer,
b) a polymerization promoter of said radically-polymerizing monomer and
c) a curing promoter of said high-molecular-weight component having reactive silicon groups
as essential components,
the total amount of the polymerization initiator and the polymerization promoter in the two-part room temperature curable composition being 0.05 to 20 wt%.

5. A two-part room temperature curable composition comprising:
- part liquid A containing
a) a high-molecular-weight copolymer having reactive silicon groups capable of crosslinking by forming siloxane bonds and whose molecular chain comprises
(1) an alkyl acrylate ester monomeric unit and/or an alkyl methacrylate ester monomeric unit, each having an alkyl group with 1 to 8 carbon atoms, and
(2) an alkyl acrylate ester monomeric unit and/or an alkyl methacrylate ester monomeric unit, each having an alkyl group with at least 10 carbon atoms, wherein the total amount of the monomeric units (1) and (2) of said copolymer exceeds 50 weight %,
b) a radically-polymerizing monomer mainly containing acrylate and/or methacrylate and
c) a polymerization initiator of said radically-polymerizing monomer
as essential components, and
- part liquid B containing
a) a curing promoter of said high-molecular-weight component having reactive silicon groups and
b) a polymerization promoter of said radically-polymerizable monomer
as essential components,
the total amount of the polymerization initiator and the polymerization promoter in the two-part room temperature curable composition being 0.05 to 20 wt%.

6. A two-part room temperature curable composition comprising:
- part liquid A containing
a) a high-molecular-weight copolymer having reactive silicon groups capable of crosslinking by forming siloxane bonds and whose molecular chain comprises
(1) an alkyl acrylate ester monomeric unit and/or an alkyl methacrylate ester monomeric unit, each having an alkyl group with 1 to 8 carbon atoms, and
(2) an alkyl acrylate ester monomeric unit and/or an alkyl methacrylate ester monomeric unit, each having an alkyl group with at least 10 carbon atoms, wherein the total amount of the monomeric units (1) and (2) in said copolymer a) exceeds 50 weight %,
b) a radically-polymerizing monomer mainly containing acrylate and/or methacrylate and
c) a polymerization promoter of said radically-polymerizing monomer
as essential components, and
- part liquid B containing
a) a curing promoter of said high-molecular-weight component having reactive silicon groups and
b) a polymerization initiator of said radically-polymerizing monomer
as essential components,
the total amount of the polymerization initiator and the polymerization promoter in the two-part room temperature curable composition being 0.05 to 20 wt%.

7. A two-part room temperature curable composition comprising:
- part liquid A containing
a) a high-molecular-weight copolymer having reactive silicon groups capable of crosslinking by forming siloxane bonds and whose molecular chain comprises
(1) an alkyl acrylate ester monomeric unit and/or an alkyl methacrylate ester monomeric unit, each having an alkyl group with 1 to 8 carbon atoms, and
(2) an alkyl acrylate ester monomeric unit and/or an alkyl methacrylate ester monomeric unit, each having an alkyl group with at least 10 carbon atoms, wherein the total amount of the monomeric units (1) and (2) in said copolymer a) exceeds 50 weight %,
b) a radically-polymerizing monomer mainly containing acrylate and/or methacrylate,
c) a polymerization promoter of said radically-polymerizing monomer and
d) a curing promoter of said high-molecular-weight component having reactive silicon groups
as essential components, and
- part liquid B containing a polymerization initiator of said radically-polymerizing monomer as an essential component,
the total amount of the polymerization initiator and the polymerization promotor in the two-part room temperature curable composition being 0.05 to 20 wt%.

8. The two-part room temperature curable composition according to any of claims 1 to 7, wherein said radically-polymerizing monomer contains acrylate and/or methacrylate.

## Patentansprüche

1. Zweiteilige, bei Raumtemperatur härtbare Zusammensetzung, umfassend:
- zu einem Teil Flüssigkeit A, die folgendes enthält
a) ein hochmolekulares Copolymer, das reaktive Siliciumgruppen aufweist, die durch Bildung von Siloxanbindungen vernetzbar sind und dessen Molekülkette folgendes umfaßt
(1) eine Alkylacrylatester-Monomereinheit und/oder eine Alkylmethacrylatester-Monomereinheit, wobei beide eine Alkylgruppe mit 1 bis 8 Kohlenstoffatomen aufweisen und
(2) eine Alkylacrylatester-Monomereinheit und/oder eine Alkylmethacrylatester-Monomereinheit, wobei beide eine Alkylgruppe mit mindestens 10 Kohlenstoffatomen aufweisen und wobei die Gesamtmenge der Monomereinheiten (1) und (2) in dem Copolymer a) 50 Gew.-% übersteigt
b) einen Polymerisationspromotor eines radikalisch polymerisierenden Monomers, das hauptsächlich Acrylat und/oder Methacrylat enthält
als essentielle Bestandteile und
- zu einem weiteren Teil Flüssigkeit B, die folgendes enthält
a) das radikalisch polymerisierende Monomer,
b) einen Polymerisationsinitiator des radikalisch polymerisierenden Monomers und
c) einen Härtungspromotor des hochmolekularen Bestandteils mit den reaktiven Siliciumgruppen
als essentielle Bestandteile
wobei die Gesamtmenge des Polymerisationsinitiators und des Polymerisationspromotors in der zweiteiligen, bei Raumtemperatur härtbaren Zusammensetzung 0,05 bis 20 Gew.-% beträgt.

2. Zweiteilige, bei Raumtemperatur härtbare Zusammensetzung, umfassend:
- zu einem Teil Flüssigkeit A, die folgendes enthält:
a) ein hochmolekulares Copolymer, das reaktive Siliciumgruppen aufweist, die durch Bildung von Siloxanbindungen vernetzbar sind und dessen Molekülkette folgendes umfaßt
(1) eine Alkylacrylatester-Monomereinheit und/oder eine Alkylmethacrylatester-Monomereinheit, wobei beide jeweils eine Alkylgruppe mit 1 bis 8 Kohlenstoffatomen aufweisen und
(2) eine Alkylacrylatester-Monomereinheit und/oder eine Alkylmethacrylatester-Monomereinheit, wobei beide eine Alkylgruppe mit mindestens 10 Kohlenstoffatomen aufweisen, wobei die Gesamtmenge der Monomereinheiten (1) und (2) des Copolymers a) 50 Gew.-% übersteigt
b) einen Polymerisationsinitiator eines radikalisch polymerisierenden Monomers, das im wesentlichen Acrylat und/oder Methacrylat enthält
als essentielle Bestandteile und
- zu einem weiteren Teil Flüssigkeit B, die folgendes enthält
a) das radikalisch polymerisierende Monomer,
b) einen Polymerisationspromotor des radikalisch polymerisierenden Monomers und
c) einen Härtungspromotor des hochmolekularen Bestandteils mit reaktiven Siliciumgruppen
als essentielle Bestandteile,
wobei die Gesamtmenge des Polymerisationsinitiators und des Polymerisationspromotors in der zweiteiligen, bei Raumtemperatur härtbaren Zusammensetzung 0,05 bis 20 Gew.-% beträgt.

3. Zweiteilige, bei Raumtemperatur härtbare Zusammensetzung, umfassend:
- zu einem Teil Flüssigkeit A, die folgendes enthält:
a) ein hochmolekulares Copolymer, das reaktive Siliciumgruppen aufweist, die durch Bildung von Siloxanbindungen vernetzbar sind und dessen Molekülkette folgendes umfaßt
(1) eine Alkylacrylatester-Monomereinheit und/oder eine Alkylmethacrylatester-Monomereinheit, wobei beide jeweils eine Alkylgruppe mit 1 bis 8 Kohlenstoffatomen aufweisen und
(2) eine Alkylacrylatester-Monomereinheit und/oder eine Alkylmethacrylatester-Monomereinheit, wobei beide eine Alkylgruppe mit mindestens 10 Kohlenstoffatomen aufweisen, wobei die Gesamtmenge der Monomereinheiten (1) und (2) des Copolymers a) 50 Gew.-% übersteigt
b) ein radikalisch polymerisierendes Monomer, das im wesentlichen Acrylat und/oder Methacrylat enthält und
c) einen Polymerisationspromotor des radikalisch polymerisierenden Monomers
als essentielle Bestandteile und
- zu einem weiteren Teil Flüssigkeit B, die folgendes enthält
a) das radikalisch polymerisierende Monomer,
b) einen Polymerisationsinitiator des radikalisch polymerisierenden Monomers und
c) einen Härtungspromotor des hochmolekularen Bestandteils mit reaktiven Siliciumgruppen
als essentielle Bestandteile,
wobei die Gesamtmenge des Polymerisationsinitiators und des Polymerisationspromotors in der zweiteiligen, bei Raumtemperatur härtbaren Zusammensetzung 0,05 bis 20 Gew.-% beträgt.

4. Zweiteilige, bei Raumtemperatur härtbare Zusammensetzung, umfassend:
- zu einem Teil Flüssigkeit A, die folgendes enthält:
a) ein hochmolekulares Copolymer, das reaktive Siliciumgruppen aufweist, die durch Bildung von Siloxanbindungen vernetzbar sind und dessen Molekülkette folgendes umfaßt
(1) eine Alkylacrylatester-Monomereinheit und/oder eine Alkylmethacrylatester-Monomereinheit, wobei beide jeweils eine Alkylgruppe mit 1 bis 8 Kohlenstoffatomen aufweisen und
(2) eine Alkylacrylatester-Monomereinheit und/oder eine Alkylmethacrylatester-Monomereinheit, wobei beide eine Alkylgruppe mit mindestens 10 Kohlenstoffatomen aufweisen, wobei die Gesamtmenge der Monomereinheiten (1) und (2) des Copolymers a) 50 Gew.-% übersteigt
b) ein radikalisch polymerisierendes Monomer, das im wesentlichen Acrylat und/oder Methacrylat enthält und
c) einen Polymerisationsinitiator des radikalisch polymerisierenden Monomers
als essentielle Bestandteile und
- zu einem weiteren Teil Flüssigkeit B, die folgendes enthält
a) das radikalisch polymerisierende Monomer,
b) einen Polymerisationspromotor des radikalisch polymerisierenden Monomers und
c) einen Härtungspromotor des hochmolekularen Bestandteils mit reaktiven Siliciumgruppen
als essentielle Bestandteile,
wobei die Gesamtmenge des Polymerisationsinitiators und des Polymerisationspromotors in der zweiteiligen, bei Raumtemperatur härtbaren Zusammensetzung 0,05 bis 20 Gew.-% beträgt.

5. Zweiteilige, bei Raumtemperatur härtbare Zusammensetzung, umfassend:
- zu einem Teil Flüssigkeit A, die folgendes enthält:
a) ein hochmolekulares Copolymer, das reaktive Siliciumgruppen aufweist, die durch Bildung von Siloxanbindungen vernetzbar sind und dessen Molekülkette folgendes umfaßt
(1) eine Alkylacrylatester-Monomereinheit und/oder eine Alkylmethacrylatester-Monomereinheit, wobei beide jeweils eine Alkylgruppe mit 1 bis 8 Kohlenstoffatomen aufweisen und
(2) eine Alkylacrylatester-Monomereinheit und/oder eine Alkylmethacrylatester-Monomereinheit, wobei beide eine Alkylgruppe mit mindestens 10 Kohlenstoffatomen aufweisen, wobei die Gesamtmenge der Monomereinheiten (1) und (2) des Copolymers a) 50 Gew.-% übersteigt
b) ein radikalisch polymerisierendes Monomer, das im wesentlichen Acrylat und/oder Methacrylat enthält und
c) einen Polymerisationsinitiator des radikalisch polymerisierenden Monomers
als essentielle Bestandteile und
- zu einem weiteren Teil Flüssigkeit B, die folgendes enthält
a) ein Härtungspromotor des hochmolekularen Bestandteils mit reaktiven Siliciumgruppen und
b) einen Polymerisationspromotor des radikalisch polymerisierenden Monomers
als essentielle Bestandteile,
wobei die Gesamtmenge des Polymerisationsinitiators und des Polymerisationspromotors in der zweiteiligen, bei Raumtemperatur härtbaren Zusammensetzung 0,05 bis 20 Gew.-% beträgt.

6. Zweiteilige, bei Raumtemperatur härtbare Zusammensetzung, umfassend:
- zu einem Teil Flüssigkeit A, die folgendes enthält:
a) ein hochmolekulares Copolymer, das reaktive Siliciumgruppen aufweist, die durch Bildung von Siloxanbindungen vernetzbar sind und dessen Molekülkette folgendes umfaßt
(1) eine Alkylacrylatester-Monomereinheit und/oder eine Alkylmethacrylatester-Monomereinheit, wobei beide jeweils eine Alkylgruppe mit 1 bis 8 Kohlenstoffatomen aufweisen und
(2) eine Alkylacrylatester-Monomereinheit und/oder eine Alkylmethacrylatester-Monomereinheit, wobei beide eine Alkylgruppe mit mindestens 10 Kohlenstoffatomen aufweisen, wobei die Gesamtmenge der Monomereinheiten (1) und (2) des Copolymers a) 50 Gew.-% übersteigt
b) ein radikalisch polymerisierendes Monomer, das im wesentlichen Acrylat und/oder Methacrylat enthält und
c) einen Polymerisationspromotor des radikalisch polymerisierenden Monomers
als essentielle Bestandteile und
- zu einem weiteren Teil Flüssigkeit B, die folgendes enthält
a) ein Härtungspromotor des hochmolekularen Bestandteils mit reaktiven Siliciumgruppen und
b) einen Polymerisationsinitiator des radikalisch polymerisierenden Monomers
als essentielle Bestandteile,
wobei die Gesamtmenge des Polymerisationsinitiators und des Polymerisationspromotors in der zweiteiligen, bei Raumtemperatur härtbaren Zusammensetzung 0,05 bis 20 Gew.-% beträgt.

7. Zweiteilige, bei Raumtemperatur härtbare Zusammensetzung, umfassend:
- zu einem Teil Flüssigkeit A, die folgendes enthält:
a) ein hochmolekulares Copolymer, das reaktive Siliciumgruppen aufweist, die durch Bildung von Siloxanbindungen vernetzbar sind und dessen Molekülkette folgendes umfaßt
(1) eine Alkylacrylatester-Monomereinheit und/oder eine Alkylmethacrylatester-Monomereinheit, wobei beide jeweils eine Alkylgruppe mit 1 bis 8 Kohlenstoffatomen aufweisen und
(2) eine Alkylacrylatester-Monomereinheit und/oder eine Alkylmethacrylatester-Monomereinheit, wobei beide eine Alkylgruppe mit mindestens 10 Kohlenstoffatomen aufweisen, wobei die Gesamtmenge der Monomereinheiten (1) und (2) des Copolymers a) 50 Gew.-% übersteigt
b) ein radikalisch polymerisierendes Monomer, das im wesentlichen Acrylat und/oder Methacrylat enthält und
c) einen Polymerisationspromotor des radikalisch polymerisierenden Monomers und
d) ein Härtungspromotor des hochmolekularen Bestandteils mit reaktiven Siliciumgruppen
als essentielle Bestandteile und
- zu einem weiteren Teil Flüssigkeit B, die einen Polymerisationsinitiator des radikalisch polymerisierenden Monomers als essentiellen Bestandteil enthält,
wobei die Gesamtmenge des Polymerisationsinitiators und des Polymerisationspromotors in der zweiteiligen, bei Raumtemperatur aushärtbaren Zusammensetzung bei 0,05 bis 20 Gew.-% liegt.

8. Zweiteilige, bei Raumtemperatur härtbare Zusammensetzung nach einem oder mehreren der Ansprüche 1 bis 7, wobei das radikalisch polymerisierende Monomer Acrylat und/oder Methacrylat enthält.

## Revendications

1. Composition à deux composants, durcissable à température ambiante, comprenant :
- un composant liquide A constitué essentiellement de :
a) un copolymère de haut poids moléculaire possédant des groupes silicium réactifs capables de réticuler en formant des liaisons siloxanes et dont la chaîne moléculaire comprend :
1- une unité monomère d'ester d'acrylate d'alkyle et/ou une unité monomère d'ester de méthacrylate d'alkyle, chacune porteuse d'un groupe alkyle de 1 à 8 atomes de carbone, et
2- une unité monomère d'ester d'acrylate d'alkyle et/ou une unité monomère d'ester de méthacrylate d'alkyle, chacune porteuse d'un groupe alkyle d'au moins 10 atomes de carbone, la totalité des unités monomères (1) et (2) dans ledit copolymère a) dépassant 50 % en poids ;
b) un promoteur de polymérisation d'un monomère à polymérisation radicalaire contenant principalement de l'acrylate et/ou du méthacrylate,
et
- un composant liquide B constitué essentiellement de :
a) ledit monomère à polymérisation radicalaire ;
b) un initiateur de polymérisation dudit monomère à polymérisation radicalaire, et
c) un promoteur de durcissement dudit copolymère de haut poids moléculaire ayant des groupes silicium réactifs,
la quantité totale d'initiateur de polymérisation et de promoteur de polymérisation dans la composition à deux composants, durcissable à température ambiante, étant de 0,05 à 20 % en poids.

2. Composition à deux composants, durcissable à température ambiante, comprenant :
- un composant liquide A constitué essentiellement de :
a) un copolymère de haut poids moléculaire possédant des groupes silicium réactifs capables de réticuler en formant des liaisons siloxanes et dont la chaîne moléculaire comprend :
1- une unité monomère d'ester d'acrylate d'alkyle et/ou une unité monomère d'ester de méthacrylate d'alkyle, chacune porteuse d'un groupe alkyle de 1 à 8 atomes de carbone, et
2- une unité monomère d'ester d'acrylate d'alkyle et/ou une unité monomère d'ester de méthacrylate d'alkyle, chacune porteuse d'un groupe alkyle d'au moins 10 atomes de carbone, la totalité des unités monomères (1) et (2) dudit copolymère a) dépassant 50 % en poids ;
b) un initiateur de polymérisation d'un monomère à polymérisation radicalaire, contenant principalement de l'acrylate et/ou du méthacrylate
et
- un composant liquide B constitué essentiellement de :
a) ledit monomère à polymérisation radicalaire ;
b) un promoteur de polymérisation dudit monomère à polymérisation radicalaire, et
c) un promoteur de durcissement dudit copolymère de haut poids moléculaire ayant des groupes silicium réactifs
la quantité totale d'initiateur de polymérisation et de promoteur de polymérisation dans la composition à deux composants, durcissable à température ambiante, étant de 0,05 à 20 % en poids.

3. Composition à deux composants, durcissable à température ambiante, comprenant :
- un composant liquide A constitué essentiellement de :
a) un copolymère de haut poids moléculaire possédant des groupes silicium réactifs capables de réticuler en formant des liaisons siloxanes et dont la chaîne moléculaire comprend :
1- une unité monomère d'ester d'acrylate d'alkyle et/ou une unité monomère d'ester de méthacrylate d'alkyle, chacune porteuse d'un groupe alkyle de 1 à 8 atomes de carbone, et
2- une unité monomère d'ester d'acrylate d'alkyle et/ou une unité monomère d'ester de méthacrylate d'alkyle, chacune porteuse d'un groupe alkyle d'au moins 10 atomes de carbone, la totalité des unités monomères (1) et (2) dudit copolymère a) dépassant 50 % en poids ;
b) un monomère à polymérisation radicalaire, contenant principalement de l'acrylate et/ou du méthacrylate, et
c) un promoteur de polymérisation dudit monomère à polymérisation radicalaire,
et
- un composant liquide B constitué essentiellement de :
a) ledit monomère à polymérisation radicalaire,
b) un initiateur de polymérisation dudit monomère à polymérisation radicalaire et
c) un promoteur de durcissement dudit copolymère de haut poids moléculaire ayant des groupes silicium réactifs,
la quantité totale d'initiateur de polymérisation et de promoteur de polymérisation dans la composition à deux composants, durcissable à température ambiante, étant de 0,05 à 20 % en poids.

4. Composition à deux composants, durcissable à température ambiante, comprenant :
- un composant liquide A constitué essentiellement de :
a) un copolymère de haut poids moléculaire possédant des groupes silicium réactifs capables de réticuler en formant des liaisons siloxanes et dont la chaîne moléculaire comprend :
1- une unité monomère d'ester d'acrylate d'alkyle et/ou une unité monomère d'ester de méthacrylate d'alkyle, chacune porteuse d'un groupe alkyle de 1 à 8 atomes de carbone, et
2- une unité monomère d'ester d'acrylate d'alkyle et/ou une unité monomère d'ester de méthacrylate d'alkyle, chacune porteuse d'un groupe alkyle d'au moins 10 atomes de carbone, la totalité des unités monomères (1) et (2) dudit copolymère a) dépassant 50 % en poids ;
b) un monomère à polymérisation radicalaire, contenant principalement de l'acrylate et/ou du méthacrylate et
c) un initiateur de polymérisation dudit monomère à polymérisation radicalaire,
et
- un composant liquide B constitué essentiellement de :
a) ledit monomère à polymérisation radicalaire,
b) un promoteur de polymérisation dudit monomère à polymérisation radicalaire, et
c) un promoteur de durcissement dudit copolymère de haut poids moléculaire ayant des groupes silicium réactifs,
la quantité totale d'initiateur de polymérisation et de promoteur de polymérisation dans la composition à deux composants, durcissable à température ambiante, étant de 0,05 à 20 % en poids.

5. Composition à deux composants, durcissable à température ambiante, comprenant :
- un composant liquide A constitué essentiellement de :
a) un copolymère de haut poids moléculaire possédant des groupes silicium réactifs capables de réticuler en formant des liaisons siloxanes et dont la chaîne moléculaire comprend :
1- une unité monomère d'ester d'acrylate d'alkyle et/ou une unité monomère d'ester de méthacrylate d'alkyle, chacune porteuse d'un groupe alkyle de 1 à 8 atomes de carbone, et
2- une unité monomère d'ester d'acrylate d'alkyle et/ou une unité monomère d'ester de méthacrylate d'alkyle, chacune porteuse d'un groupe alkyle d'au moins 10 atomes de carbone, la totalité des unités monomères (1) et (2) dudit copolymère a) dépassant 50 % en poids ;
b) un monomère à polymérisation radicalaire, contenant principalement de l'acrylate et/ou du méthacrylate et
c) un initiateur de polymérisation dudit monomère à polymérisation radicalaire,
- un composant liquide B constitué essentiellement de :
a) un promoteur de durcissement dudit copolymère de haut poids moléculaire ayant des groupes silicium réactifs et
b) un promoteur de polymérisation dudit monomère à polymérisation radicalaire,
la quantité totale d'initiateur et de promoteur de polymérisation dans la composition à deux composants, durcissable à température ambiante, étant de 0,05 à 20 % en poids.

6. Composition à deux composants, durcissable à température ambiante, comprenant :
- un composant liquide A constitué essentiellement de :
a) un copolymère de haut poids moléculaire possédant des groupes silicium réactifs capables de réticuler en formant des liaisons siloxanes et dont la chaîne moléculaire comprend :
1- une unité monomère d'ester d'acrylate d'alkyle et/ou une unité monomère d'ester de méthacrylate d'alkyle, chacune porteuse d'un groupe alkyle de 1 à 8 atomes de carbone, et
2- une unité monomère d'ester d'acrylate d'alkyle et/ou une unité monomère d'ester de méthacrylate d'alkyle, chacune porteuse d'un groupe alkyle d'au moins 10 atomes de carbone, la totalité des unités monomères (1) et (2) dudit copolymère a) dépassant 50 % en poids ;
b) un monomère à polymérisation radicalaire, contenant principalement de l'acrylate et/ou du méthacrylate et
c) un promoteur de polymérisation dudit monomère à polymérisation radicalaire,
et
- un composant liquide B constitué essentiellement de :
a) un promoteur de durcissement dudit copolymère de haut poids moléculaire ayant des groupes silicium réactifs et
b) un initiateur de polymérisation dudit monomère à polymérisation radicalaire,
la quantité totale d'initiateur de polymérisation et de promoteur de polymérisation dans la composition à deux composants, durcissable à température ambiante, étant de 0,05 à 20 % en poids.

7. Composition à deux composants, durcissable à température ambiante, comprenant :
- un composant liquide A constitué essentiellement de :
a) un copolymère de haut poids moléculaire possédant des groupes silicium réactifs capables de réticuler en formant des liaisons siloxanes et dont la chaîne moléculaire comprend :
1- une unité monomère d'ester d'acrylate d'alkyle et/ou une unité monomère d'ester de méthacrylate d'alkyle, chacune porteuse d'un groupe alkyle de 1 à 8 atomes de carbone, et
2- une unité monomère d'ester d'acrylate d'alkyle et/ou une unité monomère d'ester de méthacrylate d'alkyle, chacune porteuse d'un groupe alkyle d'au moins 10 atomes de carbone, la totalité des unités monomères (1) et (2) dudit copolymère a) dépassant 50 % en poids ;
b) un monomère à polymérisation radicalaire, contenant principalement de l'acrylate et/ou du méthacrylate,
c) un promoteur de polymérisation dudit monomère à polymérisation radicalaire, et
d) un promoteur de durcissement dudit copolymère de haut poids moléculaire ayant des groupes silicium réactifs,
et
- un composant liquide B contenant un initiateur de polymérisation dudit monomère à polymérisation radicalaire, comme composant essentiel,
la quantité totale d'initiateur de polymérisation et de promoteur de polymérisation dans la composition à deux composants, durcissable à température ambiante, étant de 0,05 à 20 % en poids.

8. Composition à deux composants, durcissable à température ambiante, selon l'une quelconque des revendications 1 à 7, dans laquelle ledit monomère à polymérisation radicalaire contient de l'acrylate et/ou du méthacrylate.
